(19) Europäisches Patentamt
European Patent Office
Office européen des brevets

(11) Veröffentlichungsnummer: **0 474 076 B1**

# (12) EUROPÄISCHE PATENTSCHRIFT

(45) Veröffentlichungstag der Patentschrift: **20.09.95**

(51) Int. Cl.[6]: **C08G 79/04**, C08L 85/02, C08L 67/02, C08L 101/00

(21) Anmeldenummer: **91114229.7**

(22) Anmeldetag: **24.08.91**

Die Akte enthält technische Angaben, die nach dem Eingang der Anmeldung eingereicht wurden und die nicht in dieser Patentschrift enthalten sind.

## (54) Polyphosphonate auf Melamin-Basis.

(30) Priorität: **06.09.90 DE 4028268**
**23.04.91 DE 4113157**

(43) Veröffentlichungstag der Anmeldung:
**11.03.92 Patentblatt 92/11**

(45) Bekanntmachung des Hinweises auf die Patenterteilung:
**20.09.95 Patentblatt 95/38**

(84) Benannte Vertragsstaaten:
**DE FR GB IT**

(56) Entgegenhaltungen:
**EP-A- 0 074 090**
**EP-A- 0 324 356**
**FR-A- 2 307 813**
**GB-A- 1 336 052**
**US-A- 4 278 591**

**ANGEWANDTE MAKROMOLEKULARE CHEMIE. Bd. 132, Nr. 2165, Juni 1985, BASEL CH Seiten 1 - 18; M. SCHMIDT ET AL.: 'Aromatische Polyphosphonate: Thermoplastische Polymere von extremer Brand widrigkeit'**

(73) Patentinhaber: **BAYER AG**

**D-51368 Leverkusen (DE)**

(72) Erfinder: **Hess, Bernhard, Dr.**
**Kaldenhausener Strasse 84**
**W-4130 Moers 2 (DE)**
Erfinder: **Schulz-Schlitte, Wolfgang, Dr.**
**Wiedstrasse 2**
**W-4047 Dormagen 1 (DE)**
Erfinder: **Kirsch, Jürgen, Dr.**
**Völklinger Strasse 20**
**W-5090 Leverkusen 1 (DE)**
Erfinder: **Freitag, Dieter, Dr.**
**Hasenheide 10**
**W-4150 Krefeld 1 (DE)**
Erfinder: **Arndt, Uwe, Dr.**
**Am Heiligenhäuschen 4**
**W-5000 Köln 40 (DE)**
Erfinder: **Gehrke, Hans-Georg, Dipl.-Ing.**
**Schlehdornweg 29**
**W-5068 Odenthal-Eberich (DE)**
Erfinder: **Zander, Klaus, Dr.**
**Gustav-Nachtigall-Strasse 9**
**W-4300 Essen 11 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 474 076 B1

**Beschreibung**

Die Erfindung betrifft neue, hochverzweigte Polyphosphonate, ein Verfahren zu ihrer Herstellung sowie ihre Verwendung zur Herstellung von Formkörpern, Fasern oder Filmen sowie als Flammschutzmittel und Stabilisatoren in Kunststoffen.

Polyphosphonate sind bekannt (vgl. DE 2 132 350, US 3 830 771, 3 829 405, JP 47/39154, 48/01600, 50/062245, 50/034649, 51/11869, DE 3 002 550). Die in den genannten Veröffentlichungen beschriebenen Polyphosphonate besitzen eine lineare Struktur und werden u.a. als Flammschutzverbesserer in Kunststoffen eingesetzt.

In EP 0 028 345 werden neben linearen aromatischen Polyphosphonaten auch verzweigte Polyphosphonate beschrieben, wobei als Verzweiger Triarylphosphate neben 3- und 4-wertigen aromatischen Alkoholen in Mengen bis zu maximal 3 Mol-% erwähnt werden. Die beschriebenen Polyphosphonate sollen in Methylenchlorid und ähnlichen Lösungsmitteln löslich sein, d.h. sie sind nur schwach verzweigt (Sp. 8, Z. 22ff). Aus EP 0 324 356 sind PET-Formmassen bekannt, die die vorgenannten Polyphosphonate als Flammschutzadditive enthalten. Nachteilig bei den beschriebenen Polyphosphonaten ist, daß beispielsweise die thermische Alterungsbeständigkeit nicht ausreichend ist oder bei der Verwendung als FR-Additive in Kombination mit anderen Thermoplasten, ein zu hoher Anteil dieser Polyphosphonate erforderlich ist, um ein bestimmtes flammwidriges Verhalten einzustellen und daß dadurch die mechanischen und thermischen Eigenschaften der flammgeschützten Mischungen in der Praxis nicht mehr ausreichen.

Die Funktionalität der als Verzweiger genannten Polyole in EP 0 028 345 und 0 324 356 ist auf maximal 4 begrenzt und ihre Menge auf insgesamt maximal 3 Mol-%, da eine größere Menge oder noch höhere Funktionalität der Polyole nach der geltenden Lehre zu geliertem, nicht mehr fließfähigem und unlöslichem Material führen muß. Die vorliegende Erfindung überwindet dieses Vorurteil und zeigt, daß trotz eines hohen Gelanteils, bedingt durch größere Mengen an Verzweigern und/oder mit höherer Funktionalität noch fließfähige Polyphosphonate erhalten werden, die, in relativ geringen Mengen anderen Thermoplasten zugesetzt, eine starke Flammschutzwirkung entwickeln, ohne die mechanischen Eigenschaften der Gesamtmischung wesentlich zu mindern.

Die Einarbeitung der erfindungsgemäßen Polyphosphonate in andere Thermoplaste bereitet trotz ihres hohen Gelgehalts überraschenderweise keine Schwierigkeiten.

Gegenstand der Erfindung sind daher neuartige, hochverzweigte Polyphosphonate basierend auf

A) 60 bis 99,9 Gew.-%, bevorzugt 70 bis 99,5 Gew.-%, besonders bevorzugt 96 bis 99,5 Gew.-% Struktureinheiten der Formel (AI) oder (AI'),

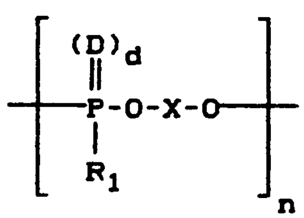 , 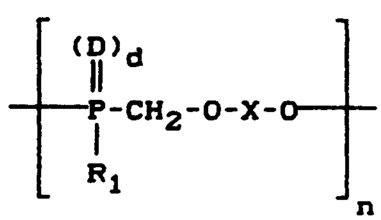 ,

(AI) (AI')

worin

- $R_1$ für einen gegebenenfalls substituierten $C_1$-$C_{10}$, bevorzugt $C_1$-$C_6$-Alkylrest oder für einen gegebenenfalls substituierten aromatischen Ring mit 6-12 C-Atomen steht,
- D für Schwefel oder Sauerstoff, bevorzugt für Sauerstoff steht,
- d Null oder 1, bevorzugt 1, bedeutet,
- n für ganze Zahlen von 2 bis 1000, bevorzugt 2 bis 100, steht und
- X für die Formel

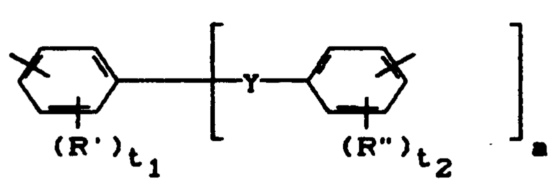

steht, in der

Y eine Einfachbindung ist oder $C_1$-$C_3$-Alkylen, $C_5$-$C_{12}$-Cycloalkylen oder O, S, CO, $SO_2$, bevorzugt $C_1$-$C_3$-Alkylen, bedeutet,

R' und R" unabhängig voneinander $c_1$-$c_{10}$, bevorzugt $C_1$-$C_6$-Alkyl, Halogen, Phenyl oder Wasserstoff, besonders bevorzugt Wasserstoff, bedeuten,

a für Null oder 1, bevorzugt 1, steht und

$t_1$ und $t_2$ unabhängig voneinander 0, 1, 2, 3 oder 4, bevorzugt 0, bedeuten,

oder

X einen Naphthylen- oder Phenolphthaleinrest bedeutet,

und

B) 0,1 bis 40 Gew.-%, bevorzugt 0,5 bis 30 Gew.-%, besonders bevorzugt 0,5 bis 4 Gew.-% Struktureinheiten einer oder mehrerer Verbindungen der Formeln (BII) oder (BIII)

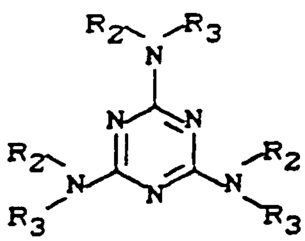

,

(BII)

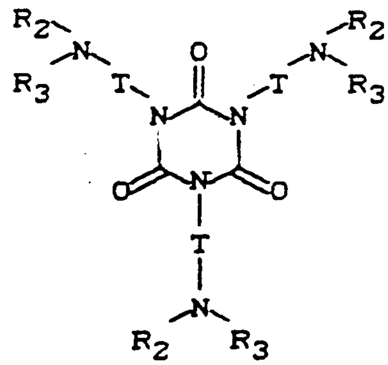

,

(BIII)

worin

$R_2$ für eine $-CH_2-O-$ Struktureinheit oder Wasserstoff steht,

$R_3$ für eine $-CH_2-O-$ Struktureinheit steht,

T für einen gegebenenfalls substituierten $C_1$-$C_{10}$-Alkylen-, $C_5$-$C_{10}$-Cycloalkylen- oder $C_6$-$C_{10}$-Arylenrest oder einen gegebenenfalls substituierten Diphenylmethanrest steht,

und Struktureinheiten basierend auf Polyphenolen mit mindestens 3 aromatischen OH-Gruppen.

Polyphenole mit mindestens 3 aromatischen OH-Gruppen werden z.B. bei der technischen Kondensation von Phenol mit Formaldehyd oder Aceton oder bei der Hydroxylierung von Aromaten erhalten. Folgende Polyphenole kommen z.B. in Betracht:

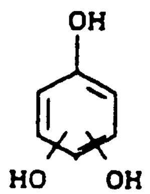,

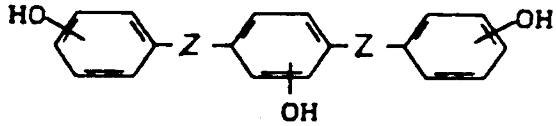,

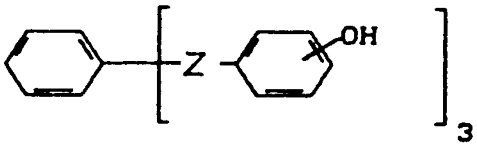,

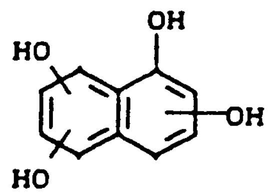,

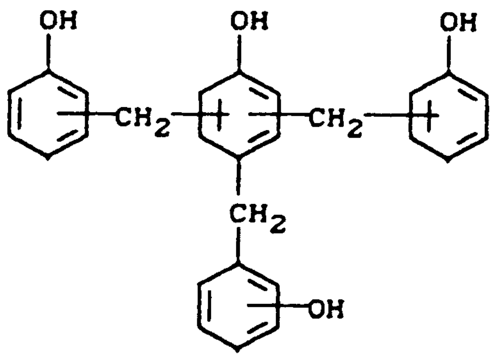

oder

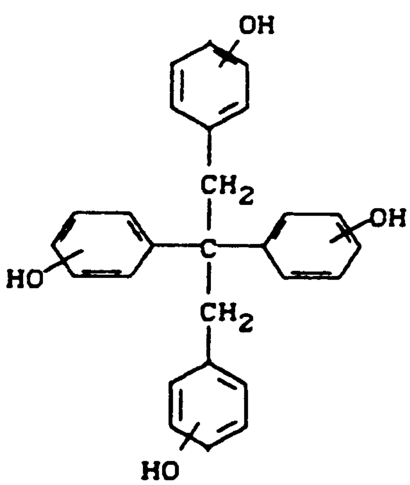.

wobei Z $-CH_2-$ oder $-C(CH_3)_2-$ bedeutet

Als Reste $R_1$ der Formeln (AI) und (AII) werden bevorzugt genannt der Methyl- und Ethylrest sowie der Phenylrest, besonders bevorzugt der Methylrest.

X steht bevorzugt für einen gegebenenfalls substituierten Phenylen-, Bisphenylen-, $C_1$-$C_3$-Alkylbisphenylen-,$C_5$-$C_{12}$-Cycloalkylbisphenylen-, Sulfonylbisphenylen-, Oxobisphenylen-, Thiobisphenylen-, Phenolphthalein-, Carbonylbisphenylen- oder Naphthylenrest, insbesondere für Phenylen oder $C_1$-$C_3$-Alkylbisphenylen. In diesem Zusammenhang sei erwähnt, daß die den bivalenten Resten X zugrundeliegenden Hydroxyverbindungen bei der Synthese der Struktureinheit (A) in beliebigen Mischungen untereinander eingesetzt werden können. In diesem Fall ist die Verteilung der Bausteine (X) statistisch.

Bevorzugt sind Polyphosphonate basierend auf Struktureinheiten, die von (AI) abgeleitet sind, wie:

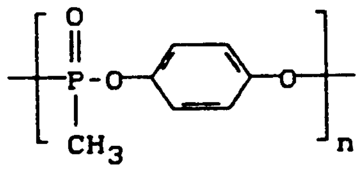 , 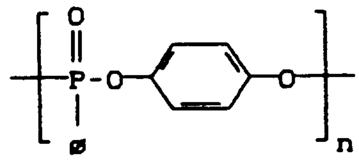 ,

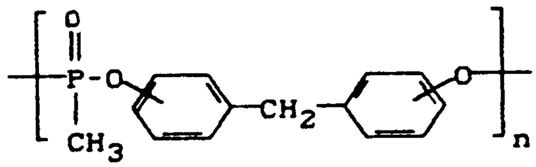 ,

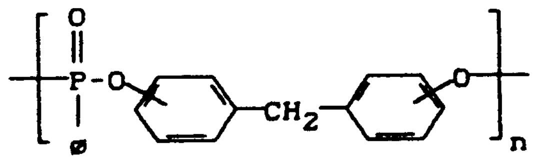 ,

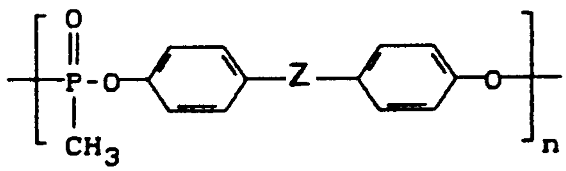 ,

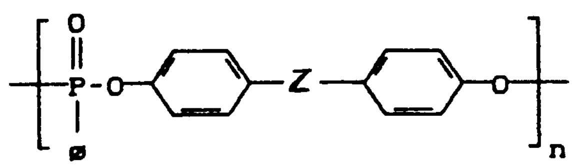 ,

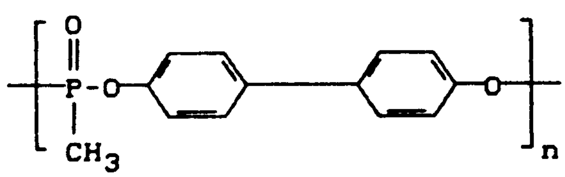 oder

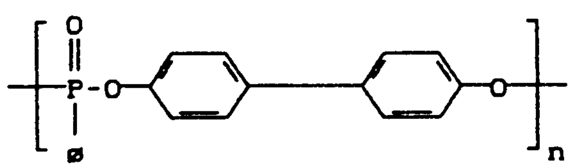 ,

worin

Z $-CH_2-$ oder $-C(CH_3)_2-$

Ø Phenyl ist und

n die für Formel (AI) genannte Bedeutung besitzt, und

sowie Struktureinheiten, die von (BII) und (BIII) abgeleitet sind, wie

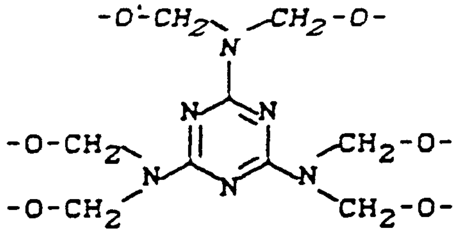

,

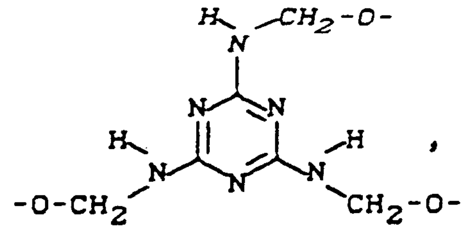

,

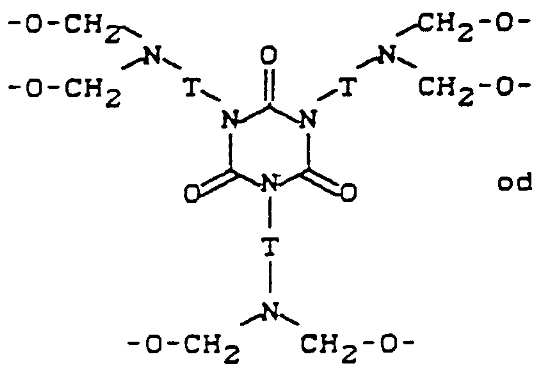

oder

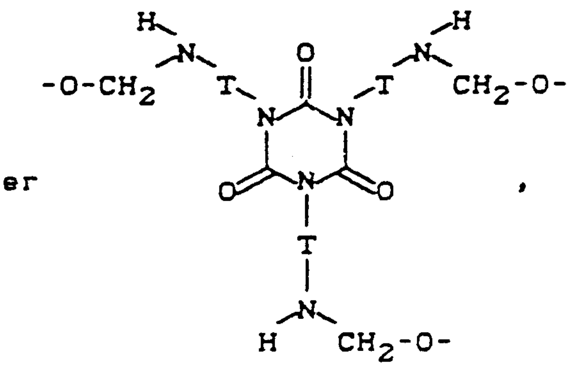

,

mit T für

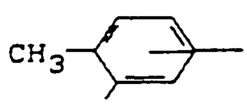

,

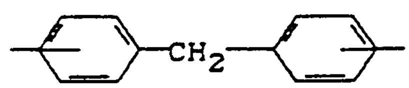

,

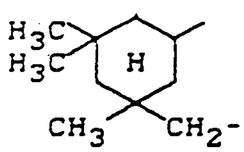

,

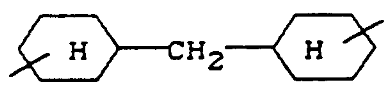

oder $-CH_2-CH_2-CH_2-CH_2-CH_2-CH_2-$ .

Besonders bevorzugt sind Polyphosphonate basierend auf Struktureinheiten der Formeln:

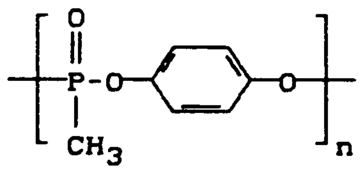

,

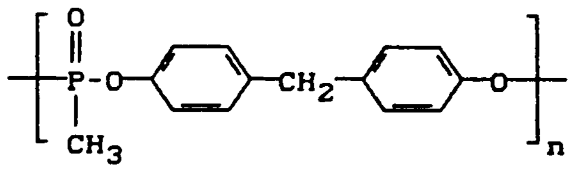

,

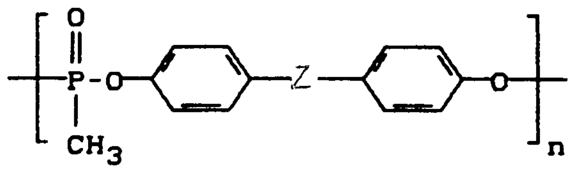

und/oder

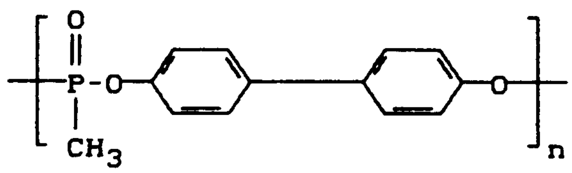

,

worin

n die für Formel (AI) genannte Bedeutung besitzt,

sowie Struktureinheiten der Formel

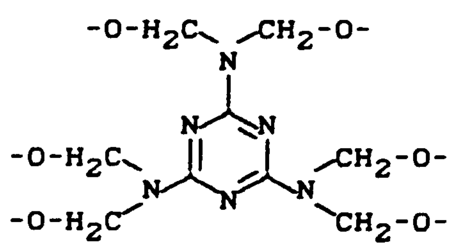

.

Die dieser Struktureinheit zugrundeliegenden leicht einkondensierbaren Komponenten sind Hexaalkylether des methylolierten Melamins wie sie von vielen Firmen als Handelsprodukt angeboten werden, z.B. der Hexymethylether als Cymel® 300, 301, 303 von der Fa. Cyanamid oder entsprechende Produkte der Fa. Hoechst (Maprenale).

Die den Struktureinheiten (AI) und (AII) (Komponente A) zugrundeliegenden Polyphosphonate sind z.B. beschrieben in DE 3 833 694, DE 3 002 550, JA 47-39154, JA 48-01600, JA 50-062245, JA 50-034649, JA 51-111869 und EP 0 334 423.

Die Struktureinheiten der Komponenten A) und B) sind in den zuvor erwähnten Mengenverhältnissen im Polyphosphonat enthalten. Die Struktureinheiten der Komponente B) können in den Polyphosphonaten im Gemisch untereinander vorhanden sein, wobei sich die günstigen Mengenverhältnisse untereinander leicht durch Vorversuche ermitteln lassen und u.a. von dem gegebenen Verwendungszweck abhängen.

Ein weiterer Gegenstand der Erfindung ist ein Verfahren zur Herstellung der Polyphosphonate durch Umesterung von mindestens einem Phosphonsäureester und einer polyfunktionellen Verbindung, die den oben erwähnten Struktureinheiten der Komponente B) zugrundeliegen und als sogenannte Verzweiger

bezeichnet werden, mit einer aromatischen Dihydroxyverbindung in der Schmelze in sauerstofffreier Gasatmosphäre bei atmosphärem Druck oder vermindertem Druck in Gegenwart katalytischer Mengen eines Umesterungskatalysators unter Abdestillieren der flüchtigen Bestandteile,

Als Umesterungskatalysatoren kommen in Frage Natriumalkoholate, wie Natriumphenolat oder Natriummethanolat, oder mindestens einer aus der Gruppe der $C_1$-$C_{18}$-Tetraalkyltitanate, $C_3$-$C_{18}$-Tetraalkylzirkonate, $C_2$-$C_{18}$-Trialkylvanadylate, $C_2$-$C_4$-Dialkylzinnoxide, $C_2$-$C_4$-Dialkylzinnverbindungen, Zink- und Calziumsalze, insbesondere deren Acetate, einer aus der Gruppe der Antimon- oder Wismutsalze, einer aus der Gruppe der $C_2$-$C_4$-Dialkylzinnsäureester, einer aus der Gruppe der $C_2$-$C_4$-Trialkylzinnsäureester oder mindestens einer der Katalysatoren aus den vorstehend genannten Gruppen im Gemisch mit Germaniumdioxid oder Titandioxid oder Säuren, wie Phosphor- oder Phosphonsäuren.

Die Herstellung der neuen Polyphosphonate kann im Prinzip erfolgen wie in EP 00 28 345 beschrieben.

Als aromatische Dihydroxyverbindungen kommen solche der allgemeinen Formel

HO - X - OH

in Frage, in der

X die in der Formel (AI) und (AI') genannte Bedeutung besitzt.

Solche aromatischen Dihydroxyverbindungen sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 095, der französischen Patentschrift 1 561 518 und in der Monographie "H. Schnell, Chemistry and Physics of Polycarbonates, Interscience Publishers, New York 1964", beschrieben.

Genannt werden:
Hydochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis-(hydroxyphenyl)-diisopropylbenzole
sowie deren kernalkylierte und kernhalogenierte Verbindungen.

Bevorzugt werden als aromatische Dihydroxyverbindungen 4,4'-Dihydroxydi-(4-hydroxyphenyl)-propan, Bis-(hydroxyphenyl)-methan, Hydrochinon und Bis-(4-hydroxyphenyl)-sulfon, besonders bevorzugt Hydrochinon, 2,2-Bis-(4-hydroxyphenyl)-propan und Bis-(hydroxyphenyl)-methan eingesetzt.

Als Phosphonsäureester kommen Verbindungen der Formeln

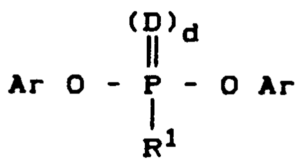

(AI)

oder

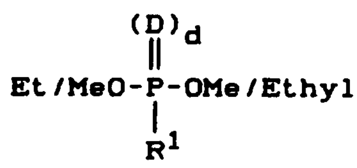

(AI)

oder

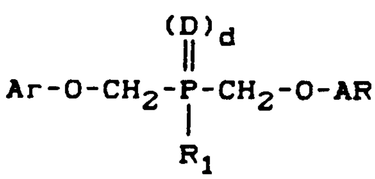

(AI')

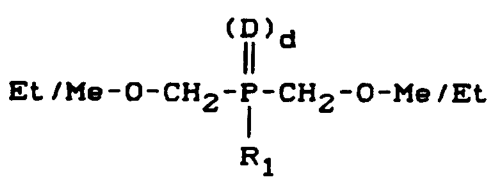

(AI')

in Frage, in der

R[1], D und d die in Formel (I) genannte Bedeutung besitzen und

Ar für einen Arylrest, bevorzugt für Phenyl steht und

Et für Ethyl und Me für Methyl stehen.

Als Phosphonsäureester kommen insbesondere Verbindungen der nachfolgenden Formeln in Frage:

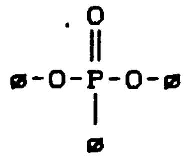 ; 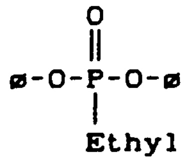 ; 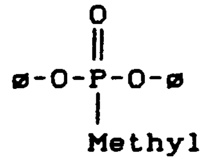 ,

besonders

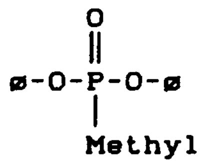 ,

wobei Ø für Phenyl steht.

Die erfindungsgemäßen Polyphosphonate haben in Methylenchlorid einen unlöslichen Anteil von ≧5 Gew.-%, bevorzugt ≧30 Gew.-%, besonders bevorzugt ≧60 Gew.-% und ganz besonders bevorzugt ≧80 Gew.-%. Der unlösliche Anteil in den Polyphosphonaten wird bestimmt durch den nur noch gelierbaren Anteil der Polyphosphonate (Vorschrift in den nachstehenden Beispielen) und ist ein Maß für den Verzweigungsgrad.

Die erfindungsgemäßen Polyphosphonate können als Additive zu Kunststoffen (Thermoplaste und Duromere) gegeben werden. Dabei zeigen sie im Vergleich zu bekannten Polyphosphonaten eine stark verbesserte Flammschutzwirkung. Außerdem ist die Einarbeitung der Polyphosphonate in die Kunststoffe ebenfalls verbessert (siehe Vergleichsbeispiele). Darüber hinaus können die erfindungsgemäßen Polyphosphonate als Stabilisatoren mit hervorragenden Migrationseigenschaften in Kunststoffen eingearbeitet werden.

Die erfindungsgemäßen Polyphosphonate können den Kunststoffen gegebenenfalls mit bekannten Verstärkungsmitteln, Verarbeitungshilfsmitteln und Farbstabilisatoren in den üblichen Mischaggregaten, wie Walzen, Knetern, Ein- und Mehrwellenextrudern zugemischt werden. Hierbei ist es besonders vorteilhaft, sowohl die Kunststoffe als auch die Polyphosphonate vor der Einarbeitung gut zu trocknen. Es ist auch möglich, die erfindungsgemäßen Polyphosphonate den Kunststoffen ohne vorherige Schmelzcompoundierung als physikalisches Gemenge direkt, z.B. in konventionellen Spritzgußverfahren, zuzusetzen.

Farbstabilisatoren sind:

A) Reduzierende Verbindungen, wie Zinn-II-Verbindungen, phosphorhaltige Verbindungen, die Phosphor in einer Oxidationsstufe < V enthalten, insbesondere solche der folgenden Formeln:

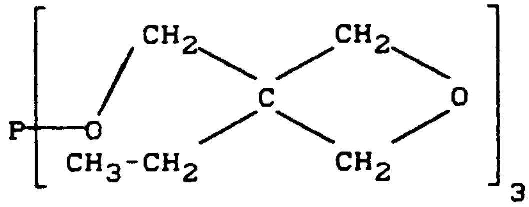

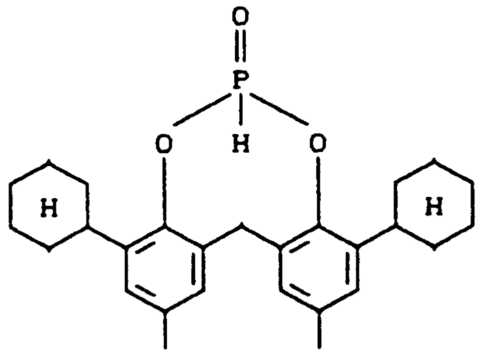

Besonders bevorzugt ist: Irgafos P-EPQ der Firma Ciba-Geigy der Formel

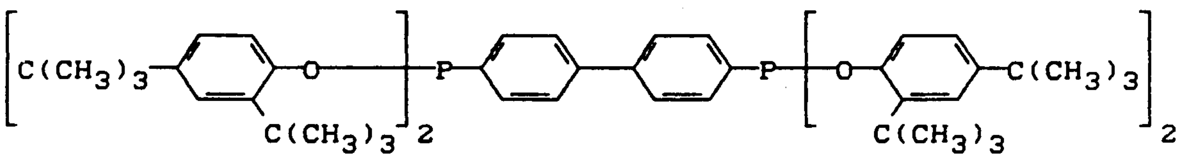

B) Reaktive Verbindungen, die in der Lage sind, mit den phenolischen Endgruppen des Polyphosphonats zu reagieren, wie Säureanhydride, z.B. Phthalsäureanhydrid, Tetrahydrophthalsäureanhydrid, Trimellit- oder Pyromellitsäureanhydrid, Bis-, Tris- oder Polyepoxide, insbesondere Bisphenol-A-bisglycidylether, Triglycidylisocyanurat, Di- oder Triisocyanate sowie deren Di- oder Trimere.

C) Schutzüberzugsmittel gegen oxidativen Angriff wie z.B. Wachse der verschiedensten Art, die gleichzeitig auch als Formtrennmittel wirken können, wie Sebazinsäurebisisooktylester, Pentaerythrittetrastearat.

Die Farbstabilisatoren können eingesetzt werden in Mengen von 0,1 bis 10 Gew.-%, bezogen auf die thermoplastische Formmasse. Sie werden am besten beim Vermischen der Polyphosphonate mit den Kunststoffen auf beheizten Mischaggregaten zugesetzt.

Im übrigen erfolgt die Abmischung der erfindungsgemäßen Polyphosphonate mit Kunststoffen in bekannter Weise (vergl. DE 3 733 840 / Deutsche Patentanmeldung P 3 833 694.4/DE 3 342 414).

Es ist auch möglich, die erfindungsgemäßen Polyphosphonate direkt zur Herstellung von thermoplastischen Formkörpern, Filmen oder Fasern zu verwenden.

Bei der Kombination der erfindungsgemäßen Polyphosphonate mit kristallisierenden Thermoplasten, wie z.B. Polyethylenterephthalat oder Polybutylenterephthalat, kann es von Vorteil sein, Nucleierungsmittel für die Kristallisation des Thermoplasten, wie z.B. Talkum, Mikrotalkum oder feinteiliges Bariumsulfat, dem Polyphosphonat zuzusetzen oder sogar dessen Kondensation in Gegenwart des Nucleierungsmittels durchzuführen, um die Kristallisation des Thermoplasten zu beschleunigen.

Besonders bevorzugt ist die Verwendung der erfindungsgemäßen Polyphosphonate in Kombination mit Polyalkylenterephthalaten.

Gegenstand der Erfindung sind ferner thermoplastische Formmassen, bestehend aus
30 bis 98 Gew.-%, vorzugsweise 40 bis 80 Gew.-%, insbesondere 45 bis 75 Gew.-% Polyalkylenterephthalat, vorzugsweise Polyethylen- oder Polybutylenterephthalat oder Mischungen daraus, und
2 bis 30 Gew.-%, vorzugsweise 2 bis 25 Gew.% Polyphosphonaten gemäß der Erfindung und
gegebenenfalls üblichen Additiven.

Als Additive können zugesetzt werden:
0,1 bis 10 Gew.-%, bezogen auf die Gesamtmenge von Polyalkylenterephthalat und Polyphosphonat, Farbstabilisatoren,
0 bis 45 Gew.-% Glasfasern,
0 bis 10 Gew.-% Polytetrafluoralkylen wie bespielsweise Polytetrafluorethylen,
0,1 bis 10 Gew.-% Nucleierungsmittel wie Talkum oder $BaSO_4$,
0,1 bis 10 Gew`-% Entformungs- und Schutzüberzugsmittel.

Beispiele

Benutzte Komponenten und deren Abkürzungen:

BPF-H: Bisphenol F (Dihydroxidiphenylmethan) technisches Gemisch aus:
14,4 Gew.-% 2,2'-BPF
44,2 Gew.-% 2,4'-BPF
31,8 Gew.-% 4,4'-BPF
9,6 Gew.-% Polyphenole

BPF-R: reines 4,4'-Bisphenol F

BPF-B: Bisphenol F
technisches Gemisch aus:
6,0 Gew.-% 2,2'-BPF
36,9 Gew.-% 2,4'-BPF
45,0 Gew.-% 4,4'-BPF
12,1 Gew.-% Polyphenole

MPDPE: Methanphosphonsäurediphenylester
Fp: 36 - 37 °C, 98 %ig rein.

Cymel: Cymel 301:
Handelsprodukt der Fa. Cyanamid; technisches Hexamethoximethylmelamin

ZnAc: Zinkacetatdihydrat

I. Synthese einiger hochverzweigter Polyphosphonate:
BPF-H Polyphosphonat (Bezeichnung: POP 1)

| | Mole | Gew.-Tle. |
|---|---|---|
| BPF-H | 1,00 | 200,0 |
| MPDPE | 0,95 | 235,6 |
| CYMEL | 0,02 | 7,8 |
| ZnAc | | 0,02 |

Die tabellarisch aufgeführten Komponenten oder ein entsprechend Vielfaches werden in eine Rührapparatur mit einer Kurzwegkolonne eingewogen und nach mehrmaligem Evakuieren und Begasen mit Stickstoff auf240 °C geheizt. Nach dem Schmelzen der Komponenten bei 120 °C wird der Rührer eingeschaltet. Nach 30 Min. bei 240 °C wird der Innendruck auf 500 mbar abgesenkt, wobei die Phenolabspaltung beginnt. Die Temperatur wird bei einem Innendruck von 500 mbar auf 280 °C gesteigert und nach Erreichen dieser Temperatur der Innendruck auf 10 - 20 mbar abgesenkt. Unter diesen Bedingungen wird verestert, bis die Schmelze sich in ein Gel verwandelt, das an der Rührerwelle hochkriecht. Man begast nun mit Stickstoff und läßt die Schmelze absitzen, die entweder abgesponnen und granuliert oder nach Erkalten gebrochen und gehäckselt wird.
Gelgehalt: 54 %.

Gelgehaltsbestimmung:
Zur Bestimmung des Verzweigungsgrades der Polyphosphonate wird der Gelkörperanteil bestimmt. Hierzu werden 1,0 g gemahlenes Polyphosphonat (Korngröße kleiner als 1 mm) in 50 ml frisch destilliertes, alkoholfreies Dichlormethan gegeben. Nach 5 min, Beschallen im Ultraschallbad (Badtemperatur: 21 - 28 °C) (Firma Bransonic B-2200 E4, HF-Nennleistung: 60 Watt) bei Raumtemperatur filtriert man ab und bestimmt den gelösten Anteil an Phosphonat nach dem Abdestillieren des Lösungsmittels.

BPF-B Polyphosphonat (Bezeichnung: POP 2)

| | Mole | Gew.-Tle. |
|---|---|---|
| BPF-B | 1,00 | 200,0 |
| MPDPE | 1,00 | 248,0 |
| CYMEL | 0,01 | 3,9 |
| ZnAc | | 0,02 |

Die Herstellung erfolgt wie bei POP 1 beschrieben, mit dem Unterschied, daß die Polykondensationstemperatur auf 300 °C gesteigert wird statt 280 °C.
Gelgehalt: 72 %
BPF-R Polyphosphonat (Bezeichnung: POP 3) Vergleichsversuch ohne Verzweiger

| | Mole | Gew.-Tle. |
|---|---|---|
| BPF-R | 1,00 | 200,0 |
| MPDPE | 1,00 | 248,0 |
| ZnAc | | 0,02 |

Die Herstellung erfolgt wie bei POP 1 beschrieben, bei einer maximalen Polykondensationstemperatur von 300 °C und einem Vakuum von 1 mbar.

Die Schmelze gelierte nicht, Gelanteile konnten nicht festgestellt werden.

BPF-B Polyphosphonat (Bezeichnung: POP 4) mit ausschließlich Polyphenolverzweiger (Vergleichsversuch)

| | Mole | Gew.-Tle. |
|---|---|---|
| BPF-B | 1,00 | 200,0 |
| MPDPE | 1,00 | 248,0 |
| ZnAc | | 0,02 |

Die Herstellung erfolgt wie bei POP 1 beschrieben, mit dem Unterschied, daß die Polykondensationstemperatur auf 300 °C und das Vakuum auf 0,01 mbar gesteigert wird.

Die Schmelze gelierte in der Endphase der Polykondensation.
Gelgehalt: 42 %
BPF-H Polyphosphonat (Bezeichnung: POP 5)

| | Mole | Gew.-Tle. |
|---|---|---|
| BPF-H | 1,00 | 200,0 |
| MPDPE | 0,95 | 235,6 |
| CYMEL | 0,05 | 19,5 |
| ZnAc | | 0,02 |

Die Herstellung erfolgt wie bei POP 1 beschrieben, mit dem Unterschied, daß die Polykondensationstemperatur auf maximal 240 °C und das Vakuum auf 5 mbar gesteigert wird.

Die Schmelze gelierte in der Endphase der Polykondensation.
Gelgehalt: 64 %
BPF-H Polyphosphonat (Bezeichnung: POP 6) mit Nucleierungsmitteln

| | Mole | Gew.-Tle. |
|---|---|---|
| BPF-H | 1,00 | 200,0 |
| MPDPE | 0,95 | 235,6 |
| CYMEL | 0,02 | 7,8 |
| ZnAc | | 0,02 |
| $BaSO_4$ | | 104,4 |

Die Herstellung erfolgt wie bei POP 1 beschrieben, mit dem Unterschied, daß das Vakuum in der Endphase der Polykondensation auf 5 mbar gesteigert wird.

Gelgehalt: 65 %

II. Herstellung und Eigenschaften von Compounds, enthaltend Polyphosphonate POP 1 bis POP 6

Alle thermoplastischen Polymere werden als Granulat oder Pulver eingesetzt. Die in Tabelle I aufgeführten Komponenten werden in einem Zweiwellenextruder vermischt, geschmolzen, zu Strängen extrudiert und granuliert. Die Herstellung der Formmassen kann beispielsweise mit dem Extruder ZSK 32 der Firma Werner und Pfleiderer, bei den üblichen Verarbeitungstemperaturen und bei einer Schneckendrehzahl von 80 bis 130 U/min sowie einem Durchsatz von 8 bis 14 kg/h erfolgen.

Nach ausreichender Trocknung (z.B. 3 bis 4 Stunden bei 140 °C) wird das Granulat auf üblichen Spritzgußmaschinen bei Massetemperaturen von 230 bis 300 °C, einer Formtemperatur von 20 bis 140 °C und einer Schmelzestandzeit von nicht länger als 9 Minuten zu Formkörpern bzw, Normprüfstägen verspritzt.

Die Prüfung der Brandwidrigkeit erfolgt nach den Richtlinien der Underwriter Laboratories (UL-94-Test). Die Ergebnisse sind in Tabelle I zusammengefaßt. Die Mengen der eingesetzten Komponenten sind in Gewichtsteilen angegeben.

Tabelle I

| Beispiel-Nr. | 1 | 2 | 3 Vergl. | 4 Vergl. | 5 | 6 | 7 |
|---|---|---|---|---|---|---|---|
| PET 1) | 53,6 | 53,6 | 53,6 | 53,6 | 53,6 | 51,6 | 53,1 |
| POP 1 | 12,5 | | | | | | 12,5 |
| POP 2 | | 12,5 | | | | | |
| POP 3 Vergl. | | | 12,5 | | | | |
| POP 4 Vergl. | | | | 12,5 | | | |
| POP 5 | | | | | 12,5 | | |
| POP 6 | | | | | | 17,5 | |
| Glasfasern 2) | 30,0 | 30,0 | 30,0 | 30,0 | 30,0 | 30,0 | 30,0 |
| PTFE 3) | 0,5 | 0,5 | 0,5 | 0,5 | 0,5 | 0,5 | 0,5 |
| Wachs 4) | 0,4 | 0,4 | 0,4 | 0,4 | 0,4 | 0,4 | 0,4 |
| $BaSO_4$ 6) | 3,0 | 3,0 | 3,0 | 3,0 | 3,0 | - | 3,0 |
| Irgafos 6) | | | | | | | 0,5 |
| UL-94 Test: (1,6 mm) 2d/7d | VO | VO | nicht bestanden | V1 | VO | | VO |

1) Polyethylenterephthalat, relative Viskosität bei 25° C: 1,4 in Phenol/o-Dichlorbenzol (1:1)
2) OCF429YZ Faserlänge: 5 mm
3) Polytetrafluorethylen: Hostaflon TF 2027 (Fa. Hoechst)
4) E-Wachs der Firma Hoechst: Montansäureester
5) $BaSO_4$ der Firma Sachtleben entsprechend OS 3 810 423
6) Irgafos P-EPQ der Firma Ciba Geigy (Formel s.S. 17)

Herstellung von Formkörpern aus Mischgranulat:

Die Komponenten des Beispiels 1 in Tabelle I werden, mit Ausnahme des POP 1, wie beschrieben extrudiert und granuliert und das Granulat mit POP 1 Granulat im Verhältnis der Rezeptur des Beispiels 1 gemischt. Die Mischung wird als Beispiel 1a bezeichnet, Das Mischgranulat wird bei 50 mbar und 60 °C über 12 Std. getrocknet und danach zu Normprüfstäben verspritzt. Die mechanischen Werte der Normprüfstäbe aus dem Mischgranulat sind vergleichsweise denjenigen des Compounds gemäß Beispiel 1 in Tabelle II gegenübergestellt.

Tabelle II

| Mechanische Werte: | | |
|---|---|---|
| Beispiel | 1 Compound | 1a Mischgranulat |
| Vicat [°C] | 185 | 230 |
| Schlagzähigk. [KJ/m²] (JZOD 1C) | 15 | 24 |
| UL-94-Test (1,6 mm) | VO | VO |

Die Beispiele zeigen deutlich, daß flammwidrige Thermoplaste mit guten technologischen Eigenschaften nur mit den erfindungsgemäßen Polyphosphonaten zu erzielen sind.

## Patentansprüche

**1.** Polyphosphonate basierend auf

A) 60 bis 99,9 Gew.-% Struktureinheiten der Formel (AI) oder (AI')

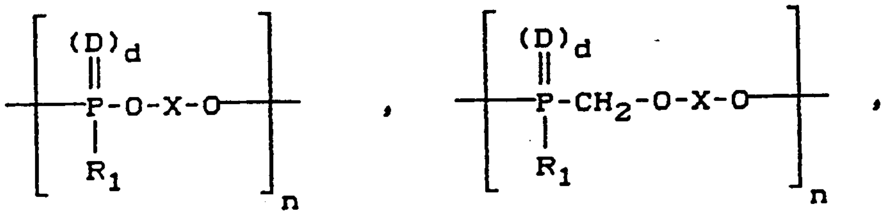

(AI) (AI')

worin

$R_1$ für einen gegebenenfalls substituierten $C_1$-$C_{10}$-Alkylrest oder für einen gegebenenfalls substituierten aromatischen Ring mit 6-12 C-Atomen,

D für Schwefel oder Sauerstoff stehen,

d Null oder 1 bedeutet,

n für ganze Zahlen von 2 bis 1000 steht und

X für die Formel

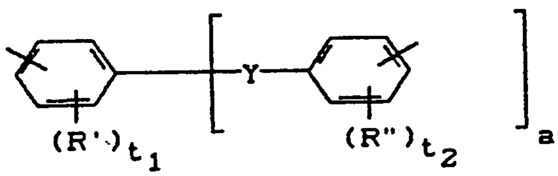

steht, in der

Y eine Einfachbindung ist oder $C_1$-$C_3$-Alkylen, $C_5$-$C_{12}$-Cycloalkylen, O, S, CO oder $SO_2$ bedeutet,

R' und R" unabhängig voneinander $C_1$-$C_{10}$-Alkyl, Halogen, Phenyl oder Wasserstoff bedeuten,

a für Null oder 1 steht und

$t_1$ und $t_2$ unabhängig voneinander O, 1, 2, 3 oder 4 bedeuten,

oder

X ein Naphthylen- oder Phenolphthaleinrest bedeutet,

und

B) 0,1 bis 40 Gew.-% Struktureinheiten einer oder mehrerer Verbindungen der Formel (BII) oder (BIII)

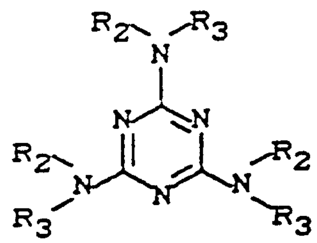 ,

(BII)

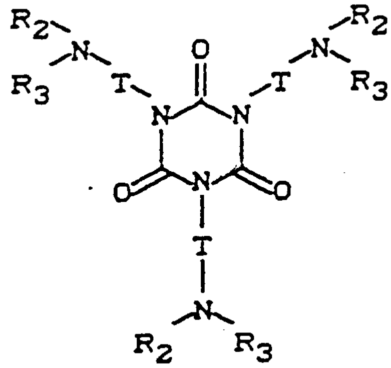 ,

(BIII)

worin

$R_2$ für eine $-CH_2-O-$ Struktureinheit oder Wasserstoff steht,

$R_3$ für eine $-CH_2-O-$ Struktureinheit steht,

T einen gegebenenfalls substituierten $C_1$-$C_{10}$-Alkylen-, $C_5$-$C_{10}$-Cycloalkylen- oder $C_6$-$C_{10}$-Arylenrest oder einen gegebenenfalls substituierten Diphenylmethanrest bedeutet,

und Struktureinheiten, die sich von Polyphenolen mit mindestens 3 aromatischen OH-Gruppen ableiten.

**2.** Polyphosphonate nach Anspruch 1 basierend auf 96 bis 99,5 Gew.-% der Komponente A) und 0,5-4 Gew.-% der Komponente B).

**3.** Verfahren zur Herstellung von Polyphosphonaten nach Anspruch 1, dadurch gekennzeichnet, daß man mindestens einen Phosphonsäureester und eine polyfunktionelle Verbindung, die den in Anspruch 1 erwähnten Struktureinheiten der Komponente (B) zugrundeliegen, mit einer aromatischen Dihydroxyverbindung in der Schmelze in sauerstofffreier Gasatmosphäre bei Atmosphärendruck oder verminderten Druck in Gegenwart katalytischer Mengen eines Umesterungskatalysators unter Abdestillieren der flüchtigen Bestandteile umestert.

**4.** Verwendung der Polyphosphonate nach Anspruch 1 als Additive zu Kunststoffen.

**5.** Verwendung der Polyphosphonaten nach Anspruch 1 in Kombination mit Farbstabilisatoren als Additive zu Kunststoffen.

**6.** Verwendung der Polyphosphonate nach Anspruch 1 zur Herstellung von thermoplastischen Formkörpern, Filmen oder Fasern.

**7.** Thermoplastische Formmassen, bestehend aus 30 bis 98 Gew.-% Polyalkylenterephthalat und 2 bis 30 Gew.-% Polyphosphonaten gemäß Anspruch 1 und gegebenenfalls üblichen Additiven.

## Claims

1. Polyphosphonates based on

A) 60 to 99.9 wt.% of structural units of the formula (AI) or (AI')

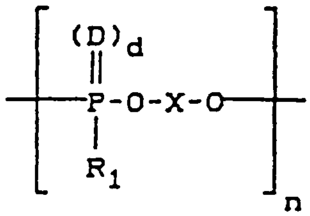
,
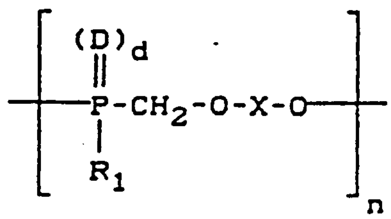
,

(AI) (AI')

in which

- $R_1$ denotes an optionally substituted $C_1$-$C_{10}$ alkyl residue or an optionally substituted aromatic ring having 6 to 12 C atoms,
- D denotes sulphur or oxygen,
- d means zero or 1,
- n denotes integers from 2 to 1000 and
- X denotes the formula

in which

- Y is a single bond or means $C_1$-$C_3$ alkylene, $C_5$-$C_{12}$ cycloalkylene, O, S, CO or $SO_2$,
- R' and R" mutually independently mean $C_1$-$C_{10}$ alkyl, halogen, phenyl or hydrogen,
- a denotes zero or 1 and
- $t_1$ and $t_2$ mutually independently mean 0, 1, 2, 3 or 4,

or

- X means a naphthylene or phenolphthalein residue,

and

B) 0.1 to 40 wt.% of structural units of one or more compounds of the formula (BII) or (BIII)

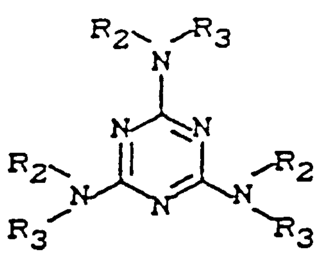
,
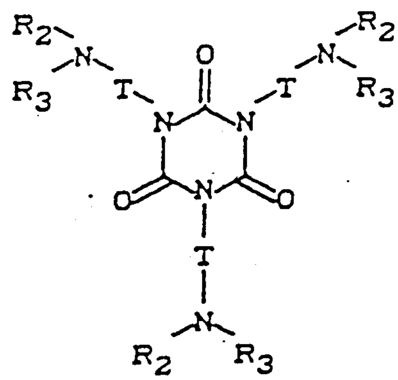
,

(BII) (BIII)

in which

- $R_2$ denotes a $-CH_2$-O- structural unit or hydrogen,
- $R_3$ denotes a $-CH_2$-O- structural unit,
- T means an optionally substituted $C_1$-$C_{10}$ alkylene, $C_5$-$C_{10}$ cyoloalkylene or $C_6$-$C_{10}$ arylene residue or an optionally substituted diphenylmethane residue,

and structural units derived from polyphenols having at least 3 aromatic OH groups.

2. Polyphosphonates according to claim 1 based on 96 to 99.5 wt.% of component A) and 0.5 to 4 wt.% of component B).

3. Process for the production of polyphosphonates according to claim 1, characterised in that at least one phosphonic acid ester and a polyfunctional compound, on which the component (B) structural units mentioned in claim 1 are based, are transesterified as a melt with an aromatic dihydroxy compound in an oxygen-free gas atmosphere at atmospheric pressure or reduced pressure in the presence of catalytic quantities of a transesterification catalyst with removal of the volatile constituents by distillation.

4. Use of the polyphosphonates according to claim 1 as additives for plastics.

5. Use of the polyphosphonates according to claim 1 combined with colour stabilisers as additives for plastics.

6. Use of the polyphosphonates according to claim 1 for the production of thermoplastic mouldings, films or fibres.

7. Thermoplastic moulding compounds consisting of 30 to 98 wt.% of polyalkylene terephthalate and 2 to 30 wt.% of polyphosphonates according to claim 1 and optionally customary additives.

**Revendications**

1. Polyphosphonates à base de
   A) 60 à 99,9 % en poids de motifs de structure de formule AI ou AI'

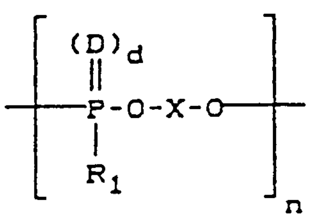
,
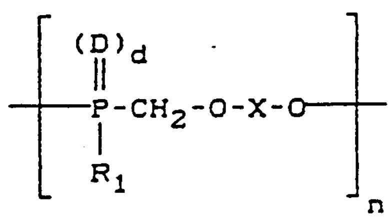
,

(AI) (AI')

dans lesquelles

- R1 représente un groupe alkyle en $C_1$-$C_{10}$ éventuellement substitué ou un cycle aromatique en $C_6$-$C_{12}$ éventuellement substitué,
- D représente le soufre ou l'oxygène
- d est égal à 0 ou 1,
- n représente un nombre entier allant de 2 à 1 000 et
- X représente le groupe

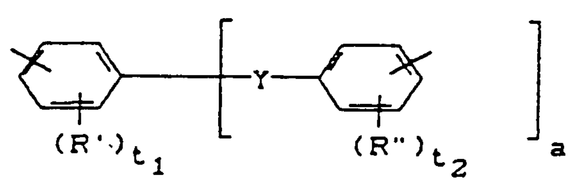

dans lequel

- Y représente une liaison simple ou un groupe alkylène en $C_1$-$C_3$, cycloalkylène en $C_5$-$C_{12}$, O, S, CO ou $SO_2$,
- R' et R" représentent chacun, indépendamment l'un de l'autre, un groupe alkyle en $C_1$-$C_{10}$, un halogène, un groupe phényle ou l'hydrogène,

a est égal à 0 ou 1 et

$t_1$ et $t_2$ sont égaux chacun, indépendamment l'un de l'autre, à 0, 1, 2, 3 ou 4,

ou bien

X représente un radical naphtylène ou le radical de la phtaléine du phénol,

et

B 0,1 à 40 % en poids de motifs de structure d'un ou plusieurs composés de formule BII ou BIII

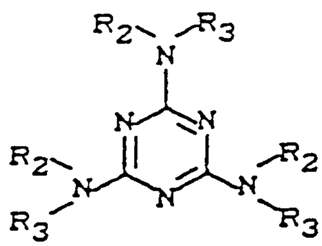

(BII)

,

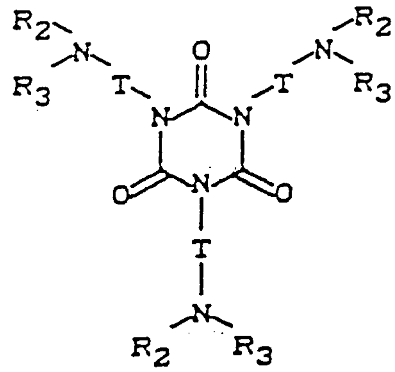

(BIII)

,

dans lesquelles

$R_2$ représente un motif de structure $-CH_2-O-$ ou l'hydrogène,

$R_3$ représente un motif de structure $-CH_2-O-$,

T représente un groupe alkylène en $C_1$-$C_{10}$, cycloalkylène en $C_5$-$C_{10}$ ou arylène en $C_6$-$C_{10}$ éventuellement substitué ou un radical de diphénylméthane éventuellement substitué,

et de motifs de structure dérivant de polyphénols à au moins trois groupes OH aromatiques.

**2.** Polyphosphonates selon revendication 1 à base de 96 à 99,5 % en poids du composant A et 0,5 à 4 % en poids du composant B.

**3.** Procédé de préparation des polyphosphonates selon revendication 1, caractérisé en ce que l'on transestérifie au moins un ester phosphonique et un composé polyfonctionnel dont dérivent les motifs de structure du composant B définis dans la revendication 1, par un composé aromatique dihydroxylé, à l'état fondu, en atmosphère exempte d'oxygène, à pression atmosphérique ou sous vide, en présence de quantités catalytiques d'un catalyseur de transestérification, en distillant les constituants volatils.

**4.** Utilisation des polyphosphonates selon revendication 1 en tant qu'additifs à des résines synthétiques.

**5.** Utilisation des polyphosphonates selon revendication 1 en combinaison avec des stabilisants de couleur en tant qu'additifs à des résines synthétiques.

**6.** Utilisation des polyphosphonates selon revendication 1 pour la fabrication d'objets moulés, de pellicules ou fibres thermoplastiques.

**7.** Matières à mouler thermoplastiques consistant en 30 à 98 % en poids d'un téréphtalate de polyalkylène et 2 à 30 % en poids de polyphosphonates selon revendication 1, avec le cas échéant des additifs usuels.